# EUROPEAN PATENT SPECIFICATION

(11) **EP 1 334 655 B1**
(45) Date of publication and mention of the grant of the patent: **05.12.2007**
(21) Application number: 03075346.1
(22) Date of filing: 04.02.2003
(51) Int. Cl.: A01G 9/22

(54) **Device for winding a screen**
Aufwickeleinrichtung für eine Rollblende
Mécanisme d'enroulement d'un store

(30) Priority: 08.02.2002 NL 1019930
(43) Date of publication of application: 13.08.2003
(73) Proprietor: Ridder Aandrijfsystemen B.V., 3846 AX Harderwijk (NL)
(72) Inventor: van der Hout, Willem Cornelis, 3843 XA Harderwijk (NL)
(74) Representative: Bartelds, Erik

(56) References cited:
- EP-A- 0 427 677
- WO-A-00/60192
- DE-A- 1 509 397
- DE-B- 1 291 929

## Description

The invention relates to a device for winding in or winding out a screen, in particular in a glasshouse, comprising at least one winding member connected to a support frame and at least one motor which is connected drivingly to the winding member and which is connected to the support frame. Such a winding device is known, for instance from the European patent 1 104 230.

In a glasshouse for horticultural products frequent use is made of screens or covers, for instance to save energy by limiting as much as possible the heat loss resulting from radiation or convection, or to screen off incident sunlight, or to prevent the emission of artificial light. Such screens or covers are generally arranged movably along outer walls and roofs of the glasshouse, but can also be used as partition between different departments in the glasshouse. Different systems are known for the opening and closing of such screens and covers. It is thus possible to retract and extend the screens or covers, whereby they come to hang in loops or folds when in the retracted state, while it is also possible to roll up or unroll the covers or screens.

For rolling up and unrolling of covers or screens, use is generally made of a tubular winding member which is mounted on a free end of the cover or screen, while the opposite end of the cover or screen is fixed to the glasshouse, for instance on the upper part of an outer wall or in the ridge of a roof. When the cover or screen is wound up, the winding tube is rotated, whereby it moves toward the fixed end of the cover or screen. Because the winding tube is fixed to the free end of the cover or screen, the tube can take a relatively long form as the tube is not loaded by its own weight and the weight of the screen, and the danger of bending is thus limited.

An important requirement laid down for all systems used in a glasshouse, and therefore also for the drive of the winding tube, is that the shading effect thereof be as small as possible. It has therefore already been proposed to drive a winding tube by means of a tube motor received therein. Such a tube motor is formed by an electric motor with a reduction gearing which has a part protruding outside the winding tube which is fixed to a carriage running along a guide in the glasshouse. The tube motor is fixed non-rotatably by this carriage, whereby a rotation of the tube motor is converted into a rotation of the winding tube, which is then moved toward or away from the fixed end of the screen. Such a tube motor is very compact, whereby the shading effect will be relatively small. Owing to its small dimensions the tube motor is moreover suitable for use in the vicinity of outer walls, where the space available will often be very limited as a result of the presence of different structural elements, heating and/or ventilation systems. However, as a result of the small dimensions of the tube motor the power for generating thereby is also limited, while in addition tube motors are not in principle designed for very intensive use and are therefore not very suitable for that purpose.

Known from the above stated European patent 1 104 230 is a winding device wherein use is made of a commercially available three-phase motor which is mounted on a pivot arm, which in turn is pivotally mounted in the support frame of the glasshouse. The motor is connected to the winding tube via a worm wheel transmission and a chain transmission connecting thereto. When the motor is energized and the rotation thereof is transmitted to the winding tube via the worm wheel transmission and the chain transmission, the screen is thus wound up or unwound, wherein the pivot arm with the motor suspended therefrom is co-displaced. This known winding device is intended for use in a roof of a so-called foil greenhouse, wherein the screen forms the actual roof. Because the motor is mounted on a pivot arm, this construction takes up a lot of space and is not suitable for use on an outer wall of a glasshouse.

The invention therefore has for its object to provide a winding device of the above described type, which has a considerable power, is suitable for intensive use, has a small shading effect and takes a relatively compact form. According to the invention this is achieved by a device according to claim 1.. By mounting the motor on the winding member instead of making use of a tube motor, it is possible to opt for a motor with relatively great power. It is moreover possible, by mounting the motor on the winding member, to dispense with separate suspension mechanisms as in the above discussed prior art while, due to the movability of the motor along the guiding, the motor can take up an optimal position relative to the winding member in all conditions, with a minimal shading effect.

The winding member is movable relative to the support frame, and the motor guiding and the movement of the winding member are in different directions, at least at the location of an end position of the winding member. Owing to this different direction, the motor can be moved in controlled manner relative to the winding member. At the location of the end position the motor guiding is advantageously directed herein almost transversely of the direction of movement of the winding member, whereby the motor can be moved away from the winding member.

When the motor is suspended from the winding member and at the location of the end position the motor guiding is directed such that the motor can be moved away under the influence of gravity from the screen connected to the winding member, the screen can be fully closed in simple manner without the motor herein being able to impede the movement of the winding member to its end position.

In order to avoid undesired displacements of the winding member under the influence of the torque of the motor, an end guide can be provided at the location of the end position of the winding member, along which end guide the winding member is movable.

In order to limit as much as possible the power required to move the screen, the motor preferably has at least one low-friction guide member co-acting with its guiding. For a stable and uniform movement of the motor, it is recommended to make use of a number of low-friction guide members arranged on both sides of the motor guiding. The winding member advantageously also has at least one low-friction guide member co-acting with the end guide. This guide member can then be arranged in the line of the winding axis of the winding member, whereby a compact construction with an optimum force transfer is obtained. In order to reduce the resistance, the or each guide member can be rotatable.

An efficient construction is obtained when the motor guiding and the end guide are formed integrally. These guides can for instance be formed by different sides of a single rod or tube.

When the support frame defines at least one outer wall and/or roof of a glasshouse, the motor guiding runs substantially parallel to the outer wall and/or roof.

In order to hold the winding speed within reasonable limits and to generate a relatively high torque, transmission means are preferably arranged between the motor and the winding member. In the case that the motor is suspended from the winding member, these transmission means are preferably received in a housing which also functions as suspension member for the motor. Different functions are thus combined in a single structural element, whereby the number of components and the size and shadow effect of the winding device are limited further.

The invention is now elucidated on the basis of an embodiment, wherein reference is made to the annexed drawing, in which:
Fig. 1 is a perspective schematic view of a glasshouse with a number of screens and winding devices according to a first embodiment of the invention,

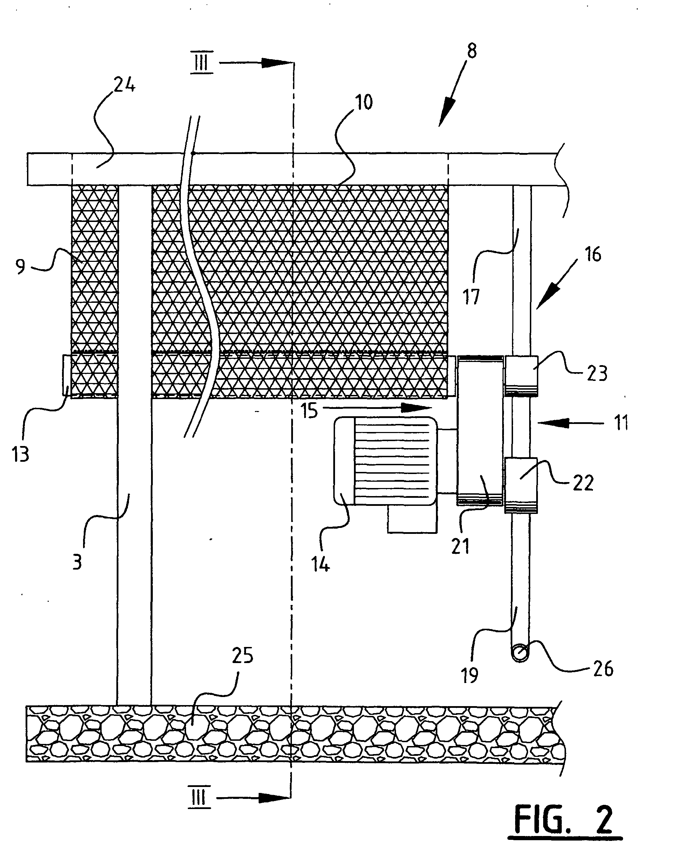

Fig. 2 is a partly broken-away detail view of a part of the screen and the winding device according to arrow II in fig. 1,
Fig. 3 is a partly broken-away side view according to arrow III in fig. 2,

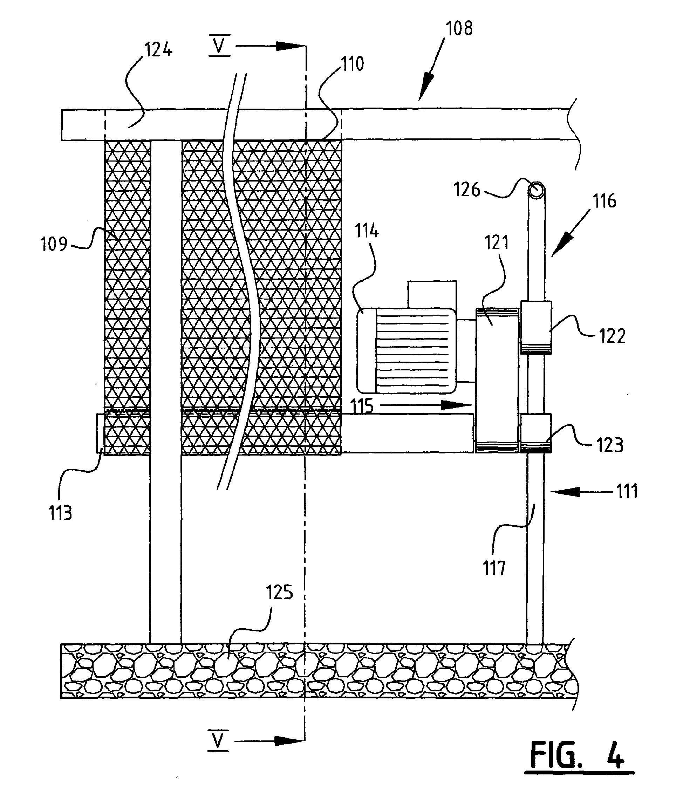

Fig. 4 is a detail view corresponding with fig. 2 of the screen with an alternative embodiment of the winding device, and
Fig. 5 is a view corresponding with fig. 3 of this second embodiment.

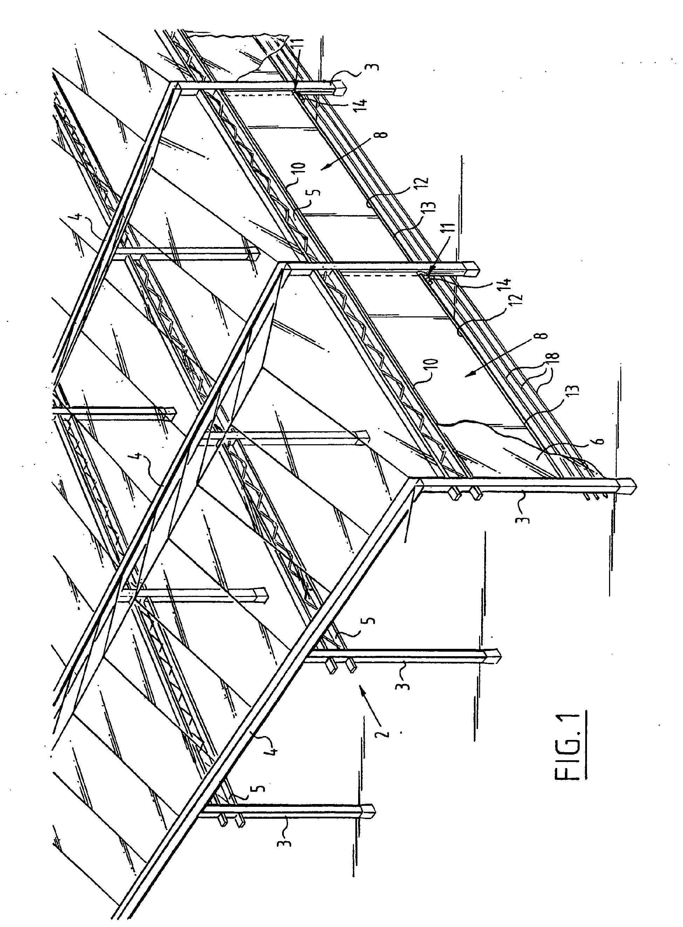

A glasshouse 1 comprises a support frame 2 which is formed by a number of uprights 3, beams 4 connecting the uprights and trusses 5 running transversely of the beams (fig. 1). Glazed outer walls 6 are formed along the outside of support frame 2, while the upper part of glasshouse 1 is formed by likewise glazed roofs 7 which are supported by beams 4 and trusses 5.

At different locations in glasshouse 1, for instance along outer walls 6 and roofs 7, there are arranged screen installations 8, only one of which is shown here. Each screen installation consists of the actual cover or screen 9, a first edge 10 of which is fixedly connected to support frame 2 of glasshouse 1, and a winding device 11 which co-acts with an opposite, second edge 12 of screen 9.

Each winding device 11 is formed by a winding tube 13 which is connected to the edge 12 of the screen 9 and a motor 14 which is connected to winding tube 13 via a transmission 15. Motor 14 can be a commercially available motor, for instance a three-phase motor, and transmission 15, which is received in a housing 21, can be a self-locking transmission.

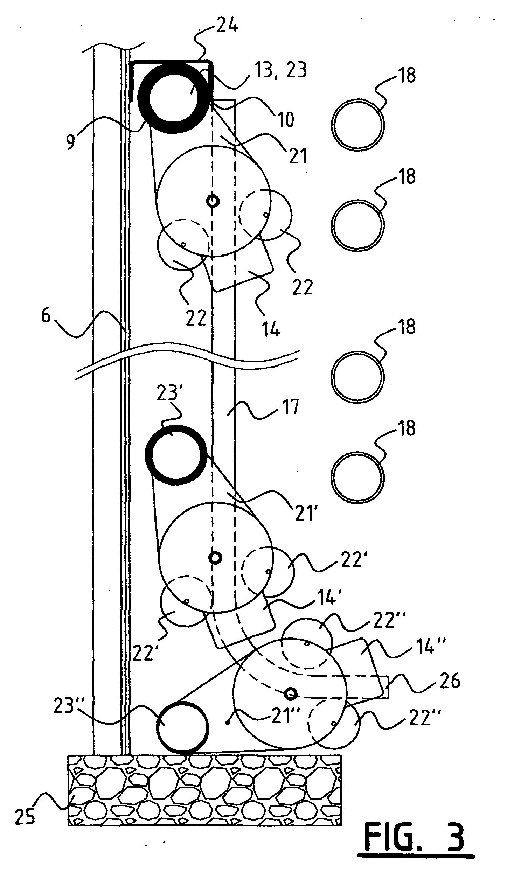

The screen installations 8 with winding devices 11 are usually arranged in glasshouse 1 at locations where on the one hand space is limited, for instance between the glazed outer wall 6 and a heating installation with pipes 18 (fig. 3), and where the light output must further be maximized. A requirement made of winding device 11 is therefore that it be very compact. In order to achieve this, the motor 14 according to the invention is connected not only drivingly, but also structurally to winding tube 13 and is movable along a guiding 16 relative to this winding tube 13. In the shown embodiment the motor 14 is suspended pivotally from winding tube 13. The housing 21 of the transmission herein functions as suspension member.

Motor guiding 16 is formed by a profiled tube or cylinder 17, along which can move two rotatable guide members 22 which are connected to motor 14. Winding tube 13 is itself also movable and during a final phase of its movement can in any case co-act with an end guide 19 of its own. This end guide 19 can be at least partly formed by one side of the same tube or cylinder 17 which also defines the first guiding 16. With a view to the movement along the end guide, winding tube 13 can likewise be provided with one or more rotatable guide members 23 which are arranged in the line of or around winding tube 13.

In order to now prevent that motor 14 and drive 15 impede the movement of screen 9 when it reaches an end position, particularly the fully unrolled end position, wherein the winding tube 13 and the edge 12 of screen 9 connected thereto practically touch the ground 25 or for instance a truss 5, in the shown embodiment the motor guiding 16 and the movement of winding tube 13 are in different directions at the location of this end position. The tube or cylinder 17 of motor guiding 16 has for this purpose a bent end part 26 which is directed practically transversely of the direction of movement of winding tube 13 and therefore the screen 9. The direction of the bent end part 26 is herein chosen such that the movement of motor 14 and transmission 15 along motor guiding 16 is assisted by gravity, whereby this movement can thus also be performed when the drive is not in operation.

The operation of winding device 11 is now as follows. When screen 9 must be wholly or partially unwound from its fully wound-up position (at the top in fig. 3), motor 14 is energized such that it begins to rotate in the unwinding direction. This rotation of motor 14 is transferred by transmission 15 to the winding tube 13 which is rotated in the unwinding direction U. Winding tube 13 and the motor and transmission 14, 15 suspended therefrom are herein moved away from the edge 10 of screen 9 which is fixedly connected to a receiving profile 24 of support frame 2. This movement is guided by guide members 22, 23 of the motor and transmission 14, 15 and winding tube 13, which move along the motor guiding 16. Depending on the equilibrium between the action of gravity on the assembly of screen 9, winding tube 13, motor 14 and transmission 15 on the one hand and the tensioning force in screen 9 on the other, one of the two guide members 22 will herein be in engagement with guiding 16. The guide roller 23 in the line of winding tube 13 herein follows substantially the same path (designated with positions 23' and 23'') as guide rollers 22 of motor 14 and of transmission 15. In the vicinity of the end of this path, the motor guiding 16 however deviates from the end guide 19, whereby the path (designated with 23''' and 23IV) of guide member 23 will also deviate from that of guide member 22. Motor 14 and transmission 15 are hereby moved away from screen 9, while winding tube 13 can move through unobstructed to the end point formed either by the ground 25, in the case of a vertical screen, or a truss 5 in the case of a horizontal screen.

The chosen suspension of the motor and transmission 14, 15 from the winding tube 13 thus achieves that the screen can be fully unrolled without the motor and transmission herein impeding the movement, while in any other position of the screen the motor and transmission 14, 15 are suspended thereunder, whereby the shading effect of these components is therefore limited. The thus obtained winding device is moreover very compact.

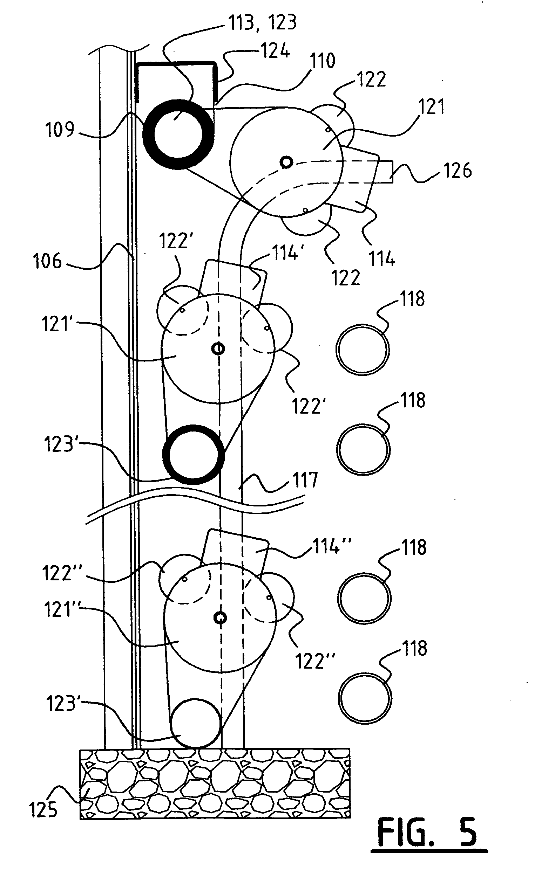

In a variant of winding device 11, the motor guiding 116 can be formed by a tube or cylinder 117, the end 120 of which deviates from the path of winding member 113 in the vicinity of the fully wound-up end position of screen 109 (fig. 5). In this variant the motor 114 does in fact hang above winding member 113.

Although the invention is described above on the basis of an embodiment, it will be apparent that this can be varied in many ways within the scope of the appended claims. The connection between the motor and the winding member could thus be realized in different manner, while the manner in which the motor and the winding member are guided could also take a different form. Instead of guide rollers, it is possible to envisage guide pins or cams optionally manufactured from a material with low frictional resistance such as Teflon. The form of the guide may also be other than shown here. The scope of the invention is therefore defined solely by the claims.

## Claims

1. Device (11; 111) for winding in or winding out a screen (9; 109), in particular in a glasshouse (1), comprising:
- at least one winding member (13; 113) connected to a support frame (2), and
- at least one motor (14; 114) which is connected drivingly to the winding member (13; 113) and which is connected movably to the support frame (2),
**characterized in that:**
- the motor (14; 111) is mounted on the outside of the winding member (13; 113) and is movable along a guiding (16; 116) relative to the winding member (13; 113),
- the winding member (13; 113) is movable relative to the support frame (2), and
- the motor guiding (16; 116) and the movement of the winding member (13; 113) are in different directions, at least at the location of an end position of the winding member (13; 113).

2. Device (11; 111) as claimed in claim 1, **characterized in that** at the location of the end position the motor guiding (16; 116) is directed almost transversely of the direction of movement of the winding member (13; 113).

3. Device (11; 111) as claimed in claim 1 or 2, **characterized in that** the motor (14; 114) is suspended from the winding member (13; 113) and at the location of the end position the motor guiding (16; 116) is directed such that the motor (14; 114) can be moved away under the influence of gravity from the screen (9; 109) connected to the winding member (13; 113).

4. Device (11; 111) as claimed in claim 3, **characterised by** an end guide (19) at the location of the end position along which the winding member (13; 113) is movable.

5. Device (11; 111) as claimed in any of the foregoing claims, **characterized in that** the motor (14; 114) has at least one low-friction guide member (22; 122) co-acting with its guiding (16; 116).

6. Device (11; 111) as claimed in claim 5, **characterized by** a number of low-triction guide members (22; 122) arranged on both sides of the motor guiding (16; 116).

7. Device (11; 111) as claimed in any of the claims 4 to 6, **characterized in that** the winding member (13; 113) has at least one low-friction guide member (23; 123) co-acting with the end guide (19).

8. Device (11; 111) as claimed in claim 7, **characterized in that** the guide member (23; 123) is arranged in the line of the winding axis of the winding member (13; 113).

9. Device (11; 111) as claimed in any of the claims 5 to 8, **characterized in that** the or each guide member (22, 23; 122, 123) is rotatable.

10. Device (11; 111) as claimed in any of the claims 4 to 9, **characterized in that** the motor guiding (16; 116) and the end guide (19) are formed integrally.

11. Device (11; 111) as claimed in any of the claims 4 to 10, **characterized in that** the support frame (2) defines at least one outer wall (2) and/or roof (7) of a glasshouse (1) and the motor guiding (16; 116) runs substantially parallel to the outer wall (6) and/or roof (7).

12. Device (11; 111) as claimed in any of the foregoing claims, **characterized by** transmission means (15; 115) arranged between the motor (14; 114) and the winding member (13; 113).

13. Device (11; 111) as claimed in claims 3 and 12, **characterized in that** the transmission means (15; 115) are received in a housing (21; 121) which also functions as suspension member for the motor (14; 114).

## Patentansprüche

1. Vorrichtung (11; 111) zum Aufwickeln oder Abwickeln einer Abschirmung (9; 109), insbesondere in einem Treibhaus, umfassend:
- mindestens ein Wickelelement (13; 113), das mit einem Stützrahmen (2) verbunden ist, und
- mindestens einen Motor (14; 114), der antreibend mit dem Wickelelement (13; 113) verbunden ist, und der bewegbar mit dem Stützrahmen (2) verbunden ist,
**dadurch gekennzeichnet, dass**
- der Motor (14; 114) an der Außenseite des Wickelelementes (13; 113) montiert ist und entlang einer Führung (16; 116) relativ zum Wickelelement (13; 113) bewegbar ist,
- das Wickelelement (13; 113) relativ zum Stützrahmen (2) bewegbar ist und
- die Motorführung (16; 116) und die Bewegung des Wickelelementes (13; 113) in unterschiedliche Richtungen erfolgen, zumindest am Ort einer Endposition des Wickelelementes (13; 113).

2. Vorrichtung (11; 111) gemäß Anspruch 1, **dadurch gekennzeichnet, dass** am Ort der Endposition die Motorführung (16; 116) nahezu transversal zur Bewegungsrichtung des Wickelelementes (13; 113) gerichtet ist.

3. Vorrichtung (11; 111) gemäß Anspruch 1 oder 2, **dadurch gekennzeichnet, dass** der Motor (14; 114) vom Wickelelement (13; 113) herabhängt und dass am Ort der Endposition die Motorführung (16; 116) derart gerichtet ist, dass der Motor (14, 114) unter dem Einfluss der Schwerkraft von der Abschirmung (9; 109) wegbewegt werden kann, die mit dem Wickelelement (13; 113) verbunden ist.

4. Vorrichtung (11; 111) gemäß Anspruch 3, **gekennzeichnet durch** eine Endführung (19) am Ort der Endposition entlang der das Wickelelement (13; 113) bewegbar ist.

5. Vorrichtung (11; 111) gemäß einem der vorhergehenden Ansprüche, **dadurch gekennzeichnet, dass** der Motor (14; 114) mindestens ein Führungselement (22; 122) mit geringer Reibung aufweist, das mit seiner Führung (16; 116) zusammen tätig ist.

6. Vorrichtung (11; 111) gemäß Anspruch 5, **gekennzeichnet durch** eine Anzahl von Führungselementen (22; 122) mit geringer Reibung, die an beiden Seiten der Motorführung (16; 116) angeordnet sind.

7. Vorrichtung (11; 111) gemäß einem der Ansprüche 4 bis 6, **dadurch gekennzeichnet, dass** das Wickelelement (13; 113) mindestens ein Führungselement mit geringer Reibung (23; 123) aufweist, das zusammen mit der Endführung (19) tätig ist.

8. Vorrichtung (11; 111) gemäß Anspruch 7, **dadurch gekennzeichnet, dass** das Führungselement (23; 123) in der Linie der Drehachse des Wickelelementes (13; 113) angeordnet ist.

9. Vorrichtung (11; 111) gemäß einem der Ansprüche 5 bis 8, **dadurch gekennzeichnet, dass** das oder jedes Führungselement (22; 23; 122; 123) rotierbar ist.

10. Vorrichtung (11; 111) gemäß einem der Ansprüche 4 bis 9, **dadurch gekennzeichnet, dass** die Motorführung (16; 116) und die Endführung (19) integriert gebildet sind.

11. Vorrichtung (11; 111) gemäß einem der Ansprüche 4 bis 10, **dadurch gekennzeichnet, dass** der Stützrahmen (2) mindestens eine Außenwand (2) und/oder Dach (7) eines Treibhauses (1) definiert und die Motorführung (16; 116) im Wesentlichen parallel zur Außenwand (2) und/oder dem Dach (7) verläuft.

12. Vorrichtung (11; 111) gemäß einem der vorhergehenden Ansprüche, **gekennzeichnet durch** Transmissionselemente (15; 115), die zwischen dem Motor (14; 114) und dem Wickelelement (13; 113) angeordnet sind.

13. Vorrichtung (11; 111) gemäß einem der Ansprüche 3 und 12, **dadurch gekennzeichnet, dass** die Transmissionselemente (15; 115) in einem Gehäuse (21; 121) aufgenommen sind, das auch als Aufhängungselement für den Motor (14; 114) wirkt.

## Revendications

1. Dispositif (11 ; 111) permettant d'enrouler ou de dérouler un écran (9 ; 109), en particulier dans une serre (1), comprenant :
- au moins un élément d'enroulement (13 ; 113) relié à un châssis (2),
- et au moins un moteur (14 ; 114) qui est relié par entraînement à l'élément d'enroulement (13 ; 113), et qui est relié avec liberté de mouvement au châssis (2),
**caractérisé en ce que** :
- le moteur (14 ; 114) est monté à l'extérieur de l'élément d'enroulement (13 ; 113) et mobile le long d'un guide (16 ; 116) par rapport à l'élément d'enroulement (13 ; 113),
- l'élément d'enroulement (13 ; 113) est mobile par rapport au châssis (2),
- et le guide (16 ; 116) de moteur et le mouvement de l'élément d'enroulement (13 ; 113) sont dans des directions différentes, au moins à l'emplacement d'une position d'extrémité de l'élément d'enroulement (13 ; 113).

2. Dispositif (11 ; 111) selon la revendication 1, **caractérisé en ce que**, à l'emplacement de la position d'extrémité, le guide (16 ; 116) de moteur est dirigé presque transversalement par rapport à la direction du mouvement de l'élément d'enroulement (13 ; 113).

3. Dispositif (11 ; 111) selon la revendication 1 ou 2, **caractérisé en ce que** le moteur (14 ; 114) est en suspension à partir de l'élément d'enroulement (13 ; 113) et **en ce qu'**à l'emplacement de la position d'extrémité, le guide (16 ; 116) de moteur est dirigé de manière à ce que le moteur (14 ; 114) puisse, sous l'effet de la gravité, s'éloigner de l'écran (9 ; 109) relié à l'élément d'enroulement (13 ; 113).

4. Dispositif (11 ; 111) selon la revendication 3, **caractérisé par** un guide d'extrémité (19), située au niveau de la position d'extrémité, le long de laquelle l'élément d'enroulement (13 ; 113) est mobile.

5. Dispositif (11 ; 111) selon l'une quelconque des revendications précédentes, **caractérisé en ce que** le moteur (14; 114) comporte au moins un élément de guidage (22 ; 122) à faible frottement qui agit conjointement avec son guide (16; 116).

6. Dispositif (11 ; 111) selon la revendication 5, **caractérisé par** un certain nombre d'élément de guidage (22 ; 122) à faible frottement disposés de part et d'autre du guide (16 ; 116) de moteur.

7. Dispositif (11 ; 111) selon l'une quelconque des revendications 4 à 6, **caractérisé en ce que** l'élément d'enroulement (13 ; 113) comporte au moins un élément de guidage (23 ; 123) à faible frottement qui co-agit avec le guide d'extrémité (19).

8. Dispositif (11 ; 111) selon la revendication 7, **caractérisé en ce que** l'élément de guidage (23 ; 123) est disposé dans l'alignement de l'axe d'enroulement de l'élément d'enroulement (13 ; 113).

9. Dispositif (11 ; 111) selon l'une quelconque des revendications 5 à 8, **caractérisé en ce que** l'élément de guidage (22, 23 ; 122, 123) ou chacun d'entre eux peut tourner.

10. Dispositif (11 ; 111) selon l'une quelconque des revendications 4 à 9, **caractérisé en ce que** la coulisse (16 ; 116) de moteur et la guide d'extrémité (19) sont formés d'un seul tenant.

11. Dispositif (11 ; 111) selon l'une quelconque des revendications 4 à 10, **caractérisé en ce que** le châssis (2) définit au moins une paroi extérieure (2) et/ou un toit (7) d'une serre (1), et **en ce que** le guide (16 ; 116) de moteur se déplace pratiquement parallèlement à la paroi extérieure (6) et/ou au toit (7).

12. Dispositif (11 ; 111) selon l'une quelconque des revendications précédentes, **caractérisé par** des moyens de transmission (15, 115) disposés entre le moteur (14 ; 114) et l'élément d'enroulement (13 ; 113).

13. Dispositif (11 ; 111) selon les revendications 3 et 12, **caractérisé en ce que** les moyens de transmission (15, 115) logent dans un carter (21 ; 121) qui fonctionne aussi en tant qu'élément de suspension pour le moteur (14 ; 114).
